# EUROPEAN PATENT APPLICATION

(11) **EP 4 346 177 A1**
(43) Date of publication of application: **03.04.2024**
(21) Application number: 23187232.6
(22) Date of filing: 24.07.2023
(51) Int. Cl.: H04L 41/14, H04L 41/0806, H04L 41/0853, H04L 41/022, H04L 41/16, H04L 41/147, H04L 41/142

(54) **AI/ML OPERATION IN SINGLE AND MULTI-VENDOR SCENARIOS**

(30) Priority: 29.09.2022 IN 202241055939
(71) Applicant: Nokia Technologies Oy, 02610 Espoo (FI)
(72) Inventor: BALASUBRAMANIAM, Sankaran, Bangalore (IN); ALI, Amaanat, Espoo (FI); PANTELIDOU, Anna, Antony (FR); ALWAR, Ethiraj, Bangalore (IN); HELMERS, Hakon, Sceaux (FR)
(74) Representative: Nokia EPO representatives

(57) **Abstract**

Method comprising:
providing, to a second node different from a first node, for each of one or more machine learning models, a respective support indication, wherein the respective support indication indicates that the first node supports the respective machine learning model, and the respective support indication comprises an identifier of the respective machine learning model and at least one capability of the respective machine learning model;
monitoring whether the first node receives, from the second node for at least one of the one or more machine learning models, a configuration request requesting to configure the respective machine learning model according to a respective requested configuration;
configuring the at least one of the one or more machine learning models according to the respective requested configuration if the first node receives the configuration request for the at least one of the one or more machine learning models from the second node.

## Description

### Field of the invention

The present disclosure relates AI/ML operation.

### Abbreviations

- 3GPP: 3^{rd} Generation Partnership Project
- 5G/6G/7G: 5^{th}/6^{th}/7^{th} Generation
- AI: Artificial Intelligence
- EE: Energy Efficiency
- gNB: next Generation NodeB
- ID: Identifier
- IE: Information Element
- KPI: Key Performance Indicator
- LB: Load Balancing
- ML: Machine Learning
- NG-AP: Next Generation Application Protocol
- NG-RAN: Next Generation RAN
- RAN: Radio Access Network
- RAT: Radio Access Technology
- OAM: Operation & Maintenance
- TR: Technical Report
- UE: User Equipment

### Background

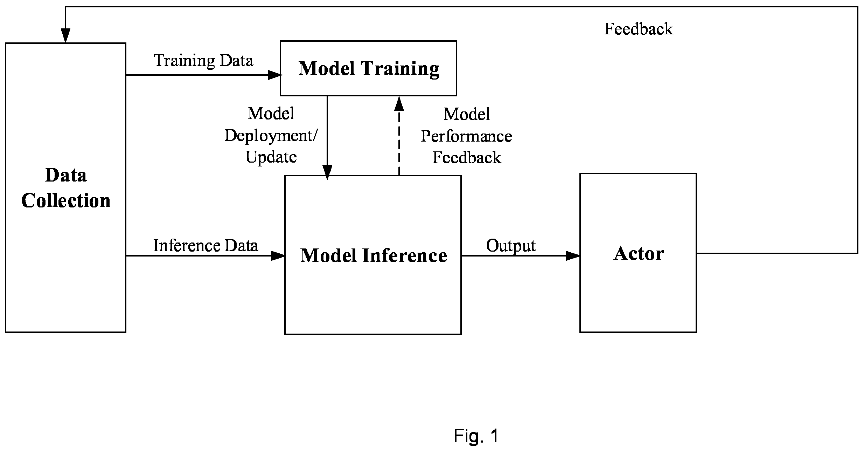

In Rel.17, a study item started in 3GPP related to introducing AI/ML intelligence in the NG-RAN architecture. The outcome of the study was captured in TR 37.817. In the TR, a functional framework for RAN Intelligence is provided, shown in Fig. 1. Furthermore, according to the outcome of the Rel.17 study, the following definitions have been captured in 3GPP TR 37.817, clause 4.2:
- Data Collection is a function that provides input data to Model training and Model inference functions. Examples of input data may include measurements from UEs or different network entities, feedback from Actor, output from an AI/ML model.
   ∘ Training Data: Data needed as input for the AI/ML Model Training function.
   ∘ Inference Data: Data needed as input for the AI/ML Model Inference function.
- Model Training is a function that performs the AI/ML model training, validation, and testing which may generate model performance metrics as part of the model testing procedure.
   ∘ Model Deployment/Update: Used to initially deploy a trained, validated, and tested AI/ML model to the Model Inference function or to deliver an updated model to the Model Inference function.
- Model Inference is a function that provides AI/ML model inference output (e.g., predictions or decisions). Model Inference function may provide Model Performance Feedback to Model Training function when applicable.
   ∘ Output: The inference output of the AI/ML model produced by a Model Inference function. Details of inference output are use case specific.
   ∘ Model Performance Feedback: It may be used for monitoring the performance of the AI/ML model, when available.
- Actor is a function that receives the output from the Model Inference function and triggers or performs corresponding actions. The Actor may trigger actions directed to other entities or to itself.
   ∘ Feedback: Information that may be needed to derive training data, inference data or to monitor the performance of the AI/ML Model and its impact to the network through updating of KPIs and performance counters.

RAN network nodes are expected to host/support, in the future, a wide variety of Machine Learning (ML) based algorithms that are expected to provide inference (Output) to one or more consumers of the inference (i.e. Actor), as shown in Fig. 1.

Inference information output by an ML based algorithm (the "output" in Fig. 1) is statistical in nature.

Note that the above Model Framework described in Fig.1 provides only some principles on the ML workflow which are typically applicable. Note also that the above definitions can be refined or updated depending on e.g. the exact algorithm and Model under consideration.

Generally speaking, statistical inference may have the following exemplary characteristics:
- It is an estimate/prediction and is therefore, a biased or unbiased estimator modelling the "true" probability distribution
- It is not 100% reliable and it is described through a confidence level (e.g. 99% of sample values are between 80-92)
- It may be a function of time in the sense that different predictions of a certain measurement can be available at different instances in time (e.g. a predicted resource load in a gNB as a function of time).

Furthermore the ability of an ML algorithm to provide an inference with a certain characteristics may be impacted by the presence/absence of some input information that may hamper the estimate. For example, lack of traffic in a given time window may affect the ability to predict load on given cell. As another example, lack of input from a neighboring node, e.g. related to UE trajectory may adversely impact making reliable handover decisions.

Also, the ability of an ML algorithm to provide an inference with a certain characteristics may be impacted by a change in the amount of processing resources required or being available for performing the inference.

There may be further potential factors that may affect the ability of an ML algorithm to provide an inference with a certain characteristics than the factors described in the examples above.

The gNB may be divided into two physical entities named CU (Centralized Unit) and DU (Distributed Unit). CU provides support for the higher layers of the protocol stack such as SDAP, PDCP and RRC, while DU provides support for the lower layers of the protocol stack such as RLC, MAC and Physical layer. One CU may control plural DUs.

### Summary

### It is an object of the present invention to improve the prior art.

According to a first aspect of the invention, there is provided an apparatus comprising:
one or more processors, and memory storing instructions that, when executed by the one or more processors, cause the apparatus to perform:
providing, to a second node different from a first node, for each of one or more machine learning models, a respective support indication, wherein the respective support indication indicates that the first node supports the respective machine learning model, and the respective support indication comprises an identifier of the respective machine learning model and at least one capability of the respective machine learning model;
monitoring whether the first node receives, from the second node for at least one of the one or more machine learning models, a configuration request requesting to configure the respective machine learning model according to a respective requested configuration;
configuring the at least one of the one or more machine learning models according to the respective requested configuration if the first node receives the configuration request for the at least one of the one or more machine learning models from the second node.

The instructions, when executed by the one or more processors, may further cause the apparatus to perform:
monitoring whether the first node receives, from the second node, a request to provide a first inference generated by a first machine learning model of the one or more machine learning models after the first node receives the configuration request;
generating the first inference by the first machine learning model configured according to the requested configuration for the first machine learning model;
providing the first inference to the second node if the first node receives the request to provide the first inference.

The configuration request may request to configure the first machine learning model and a second model of the machine learning models according to the respective requested configuration;
the first machine learning model may be different from the second machine learning model; and the instructions, when executed by the one or more processors, may further cause the apparatus to perform:
monitoring whether the first node receives a replacement request indicating that the first machine learning model is to be replaced by the second machine learning model or an addition request indicating to add the second machine learning model to the first machine learning model;
generating a second inference by the second machine learning model configured according to the requested configuration for the second machine learning model if the replacement request or the addition request is received;
supervising whether the first node receives, from the second node, a request to provide the second inference generated by the second machine learning model;
providing the second inference to the second node if the first node receives the request to provide the second inference.

The configuration request may request to configure the first machine learning model according to a first requested configuration and according to a second requested configuration different from the first requested configuration; and the instructions, when executed by the one or more processors, may further cause the apparatus to perform:
monitoring whether the first node receives a replacement request indicating that the first requested configuration is to be replaced by the second requested configuration or an addition request indicating to add the second requested configuration to the first requested configuration;
generating a third inference by the first machine learning model configured according to the second requested configuration if the replacement request or the addition request is received;
supervising whether the first node receives, from the second node, a request to provide the third inference generated by the first machine learning model configured according to the second requested configuration;
providing the third inference to the second node if the first node receives the request to provide the second inference.

The instructions, when executed by the one or more processors, may further cause the apparatus to perform:
inhibiting, for at least one of the one or more machine learning models, transferring the respective machine learning model to the second node.

For each of the one or more machine learning models, the capability of the respective machine learning model may comprise at least one input that may be used by the respective machine learning model, at least one output that may be provided by the respective machine learning model, and for each of the at least one output, a characteristic of the respective output dependent on the at least one input.

For each of the one or more machine learning models, the respective requested configuration may comprise a selection of one or more inputs among the at least one input that may be used by the respective machine learning model.

The instructions, when executed by the one or more processors, may further cause the apparatus to perform for the at least one of the one or more machine learning models:
deciding if the configuration request for the respective machine learning model is accepted;
inhibiting the configuring the respective machine learning model if the configuration request is not accepted.

The instructions, when executed by the one or more processors, may further cause the apparatus to perform for the at least one of the one or more machine learning models:
checking if the respective machine learning model is ready for immediate inference calculation;
making the respective machine learning model ready for immediate inference calculation if the respective machine learning model is not ready for immediate inference calculation and the configuration request for the respective machine learning model is accepted.

According to a second aspect of the invention, there is provided an apparatus comprising:
one or more processors, and memory storing instructions that, when executed by the one or more processors, cause the apparatus to perform:
monitoring whether a second node receives, for each of one or more machine learning models, a respective support indication, wherein the respective support indication indicates that a first node different from the second node supports the respective machine learning model, and the respective support indication comprises an identifier of the respective machine learning model and at least one capability of the respective machine learning model;
determining, for at least one machine learning model of the one or more machine learning models, a respective requested configuration of the respective machine learning model if the second node receives the support indication for each of the one or more machine learning models, wherein the respective requested configuration is based on the at least one capability of the respective machine learning model;
providing, to the first node, a configuration request requesting to configure the at least one machine learning model according to the respective requested configuration, wherein the configuration request comprises the identifiers of the at least one machine learning model.

The instructions, when executed by the one or more processors, may further cause the apparatus to perform:
requesting, from the first node, to provide a first inference generated by a first machine learning model of the at least one machine learning model after the configuration request for the first machine learning model is provided to the first node;
supervising whether the second node receives the first inference from the first node;
applying, by the second node, the first inference if the second node receives the first inference from the first node.

The instructions, when executed by the one or more processors, may cause the apparatus to perform
the monitoring by monitoring whether the second node receives, for the first machine learning model and a second machine learning model of the machine learning models, the respective support indication, wherein the second machine learning model is different from the first machine learning model;
the determining by determining a respective requested configuration of at least the first machine learning model and the second machine learning model;
the providing by providing, to the first node, the configuration request requesting to configure the first machine learning model and the second machine learning model according to the respective requested configuration; and the instructions, when executed by the one or more processors, further cause the apparatus to perform:
instructing the first node to replace the first machine learning model by the second machine learning model or to add the second machine learning model to the first machine learning model;
requesting, from the first node, to provide a second inference generated by the second machine learning model;
supervising whether the second node receives the second inference from the first node;
applying, by the second node, the second inference if the second node receives the second inference from the first node.

The instructions, when executed by the one or more processors, may cause the apparatus to perform
the monitoring by monitoring whether the second node receives, for the first machine learning model, the support indication, wherein the support indication indicates that the first node supports the first machine learning model according to a first capability and according to a second capability;
the determining by determining a respective requested configuration of the first machine learning model configured according to the first configuration and the first machine learning model configured according to the second capability;
the providing by providing, to the first node, the configuration request requesting to configure the first machine learning model according to the first configuration and according to a second configuration; and the instructions, when executed by the one or more processors, may further cause the apparatus to perform:
instructing the first node to replace the first machine learning model configured according to the first capability by the first machine learning model configured by the second machine learning model or to add the first model configured by the second capability to the first model configured by the first capability;
requesting, from the first node, to provide a third inference generated by the first machine learning mode configured according to the second capability;
supervising whether the second node receives the third inference from the first node;
applying, by the second node, the third inference if the second node receives the third inference from the first node.

The instructions, when executed by the one or more processors, may further cause the apparatus to perform:
storing, for each of the one or more machine learning models, the identifier of the respective machine learning model and the at least one capability of the respective machine learning model at the second node if the second node receives the support indication for the respective machine learning model.

For each of the one or more machine learning models, the capability of the respective machine learning model may comprise at least one input that may be used by the respective machine learning model, at least one output that may be provided by the respective machine learning model, and for each of the at least one output, a characteristic of the respective output dependent on the at least one input.

For each of the one or more machine learning models, the respective requested configuration may comprise a selection of one or more inputs among the at least one input that may be used by the respective machine learning model.

According to a third aspect of the invention, there is provided a method comprising:
providing, to a second node different from a first node, for each of one or more machine learning models, a respective support indication, wherein the respective support indication indicates that the first node supports the respective machine learning model, and the respective support indication comprises an identifier of the respective machine learning model and at least one capability of the respective machine learning model;
monitoring whether the first node receives, from the second node for at least one of the one or more machine learning models, a configuration request requesting to configure the respective machine learning model according to a respective requested configuration;
configuring the at least one of the one or more machine learning models according to the respective requested configuration if the first node receives the configuration request for the at least one of the one or more machine learning models from the second node.

The method may further comprise:
monitoring whether the first node receives, from the second node, a request to provide a first inference generated by a first machine learning model of the one or more machine learning models after the first node receives the configuration request;
generating the first inference by the first machine learning model configured according to the requested configuration for the first machine learning model;
providing the first inference to the second node if the first node receives the request to provide the first inference.

The configuration request may request to configure the first machine learning model and a second model of the machine learning models according to the respective requested configuration;
the first machine learning model may be different from the second machine learning model; and the method may further comprise:
monitoring whether the first node receives a replacement request indicating that the first machine learning model is to be replaced by the second machine learning model or an
addition request indicating to add the second machine learning model to the first machine learning model;
generating a second inference by the second machine learning model configured according to the requested configuration for the second machine learning model if the replacement request or the addition request is received;
supervising whether the first node receives, from the second node, a request to provide the second inference generated by the second machine learning model;
providing the second inference to the second node if the first node receives the request to provide the second inference.

The configuration request may request to configure the first machine learning model according to a first requested configuration and according to a second requested configuration different from the first requested configuration; and the method may further comprise:
monitoring whether the first node receives a replacement request indicating that the first requested configuration is to be replaced by the second requested configuration or an addition request indicating to add the second requested configuration to the first requested configuration;
generating a third inference by the first machine learning model configured according to the second requested configuration if the replacement request or the addition request is received;
supervising whether the first node receives, from the second node, a request to provide the third inference generated by the first machine learning model configured according to the second requested configuration;
providing the third inference to the second node if the first node receives the request to provide the second inference.

The method may further comprise:
inhibiting, for at least one of the one or more machine learning models, transferring the respective machine learning model to the second node.

For each of the one or more machine learning models, the capability of the respective machine learning model may comprise at least one input that may be used by the respective machine learning model, at least one output that may be provided by the respective machine learning model, and for each of the at least one output, a characteristic of the respective output dependent on the at least one input.

For each of the one or more machine learning models, the respective requested configuration may comprise a selection of one or more inputs among the at least one input that may be used by the respective machine learning model.

The method may further comprise, for the at least one of the one or more machine learning models:
deciding if the configuration request for the respective machine learning model is accepted;
inhibiting the configuring the respective machine learning model if the configuration request is not accepted.

The method may further comprise, for the at least one of the one or more machine learning models:
checking if the respective machine learning model is ready for immediate inference calculation;
making the respective machine learning model ready for immediate inference calculation if the respective machine learning model is not ready for immediate inference calculation and the configuration request for the respective machine learning model is accepted.

According to a fourth aspect of the invention, there is provided a method comprising:
monitoring whether a second node receives, for each of one or more machine learning models, a respective support indication, wherein the respective support indication indicates that a first node different from the second node supports the respective machine learning model, and the respective support indication comprises an identifier of the respective machine learning model and at least one capability of the respective machine learning model;
determining, for at least one machine learning model of the one or more machine learning models, a respective requested configuration of the respective machine learning model if the second node receives the support indication for each of the one or more machine learning models, wherein the respective requested configuration is based on the at least one capability of the respective machine learning model;
providing, to the first node, a configuration request requesting to configure the at least one machine learning model according to the respective requested configuration, wherein the configuration request comprises the identifiers of the at least one machine learning model.

The method may further comprise:
requesting, from the first node, to provide a first inference generated by a first machine learning model of the at least one machine learning model after the configuration request for the first machine learning model is provided to the first node;
supervising whether the second node receives the first inference from the first node;
applying, by the second node, the first inference if the second node receives the first inference from the first node.

The monitoring may comprise monitoring whether the second node receives, for the first machine learning model and a second machine learning model of the machine learning models, the respective support indication, wherein the second machine learning model is different from the first machine learning model;
the determining may comprise determining a respective requested configuration of at least the first machine learning model and the second machine learning model;
the providing may comprise providing, to the first node, the configuration request requesting to configure the first machine learning model and the second machine learning model according to the respective requested configuration; and the method may further comprise:
instructing the first node to replace the first machine learning model by the second machine learning model or to add the second machine learning model to the first machine learning model;
requesting, from the first node, to provide a second inference generated by the second machine learning model;
supervising whether the second node receives the second inference from the first node;
applying, by the second node, the second inference if the second node receives the second inference from the first node.

The monitoring may comprise monitoring whether the second node receives, for the first machine learning model, the support indication, wherein the support indication indicates that the first node supports the first machine learning model according to a first capability and according to a second capability;
the determining may comprise determining a respective requested configuration of the first machine learning model configured according to the first configuration and the first machine learning model configured according to the second capability;
the providing may comprise providing, to the first node, the configuration request requesting to configure the first machine learning model according to the first configuration and according to a second configuration; and the method may further comprise:
instructing the first node to replace the first machine learning model configured according to the first capability by the first machine learning model configured by the second machine learning model or to add the first model configured by the second capability to the first model configured by the first capability;
requesting, from the first node, to provide a third inference generated by the first machine learning mode configured according to the second capability;
supervising whether the second node receives the third inference from the first node;
applying, by the second node, the third inference if the second node receives the third inference from the first node.

The method may further comprise:
storing, for each of the one or more machine learning models, the identifier of the respective machine learning model and the at least one capability of the respective machine learning model at the second node if the second node receives the support indication for the respective machine learning model.

For each of the one or more machine learning models, the capability of the respective machine learning model may comprise at least one input that may be used by the respective machine learning model, at least one output that may be provided by the respective machine learning model, and for each of the at least one output, a characteristic of the respective output dependent on the at least one input.

For each of the one or more machine learning models, the respective requested configuration may comprise a selection of one or more inputs among the at least one input that may be used by the respective machine learning model.

### Each of the methods of the third and fourth aspects may be a method of AI/ML operation.

According to a fifth aspect of the invention, there is provided a computer program product comprising a set of instructions which, when executed on an apparatus, is configured to cause the apparatus to carry out the method according to any of the third and fourth aspects. The computer program product may be embodied as a computer-readable medium or directly loadable into a computer.

According to some embodiments of the invention, at least one of the following advantages may be achieved:
- ML models may be fully exploited in single vendor environments and even in multivendor environments;
- the ML model as such may be kept confidential.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows a functional framework for RAN intelligence according to 3GPP TR 37.817 Rel 17;
Fig. 2 shows a message sequence chart according to some example embodiments of the invention;
Fig. 3 shows a message sequence chart according to some example embodiments of the invention;
Fig. 4 shows an apparatus according to an example embodiment of the invention;
Fig. 5 shows a method according to an example embodiment of the invention;
Fig. 6 shows an apparatus according to an example embodiment of the invention;
Fig. 7 shows a method according to an example embodiment of the invention; and
Fig. 8 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

The actor(s) of the AI/ML implementation may or may not be co-located in the same network node as the model inference. If they are not collocated, the interfaces X2/Xn between the RAN nodes and the RAN-Core interface NG-AP may have to support information elements (IE's) to carry information between different network nodes.

According to some example embodiments of the invention, the inference from one node could be queried and used by another node (e.g. a neighbouring node) using a RAN interface (e.g., Xn or X2 interface, F1 interface, E1 interface, to name a few). The querying node may or may not be aware of the dynamic factors that affect the ability of the node to provide an inference with a certain characteristics that does the actual inference.

Some example embodiments of the invention may enable a second network node, interested to receive and utilize Model Inference information, to learn the ML capabilities of a ML function hosted by a first node (e.g. neighboring node, also denoted hosting node) producing the Model Inference. If the second network node knows the host node's capabilities, it may be able to subscribe to the ML model (ML-assisted algorithm) in the hosting node with a certain configuration of the ML model. In this way, the second node may receive, from the hosting node, Model Inference having characteristics as desired by the second node. A solution to this technical problem is relevant for both single and multi-vendor scenarios.

Some example embodiments of the invention enable a network node to reliably share or consume inference from another node (e.g. from a neighboring node). This option is particularly relevant if the two nodes are from different vendors because a hosting node of an ML model would typically not want to share the model implementation details to the other (neighboring) nodes. However, even if both nodes are from the same vendor, the second node might not be interested in the model implementation details of the first one, but only in the characteristics of the Model Inference.

A capability of an ML model ("Model Capability") comprises a combination of required input parameter(s) to the ML model and characteristics of the output from the ML model, dependent on the input parameters (e.g., dependent on the presence or absence of the input parameter(s) and/or dependent on a respective value range of the input parameter(s)). The characteristics of the output comprise e.g. a level of accuracy, and/or a level of reliability of a prediction, and/or the validity time of a prediction etc. It is to be understood that different Models may have different Model Capabilities depending on the input provided to the ML Model. The ML capability may be restricted to those attributes (input parameters and/or output characteristics) the host node want to make the other node(s) make aware of.

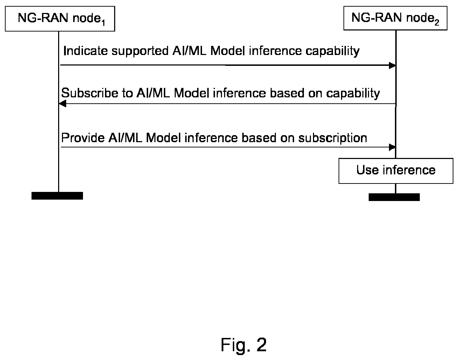

Fig. 2 shows a message sequence chart according to some example embodiments of the invention. In this example embodiment, a network node ("host", NG-RAN node 1) provides, for an ML-assisted algorithm (ML models), a capability supported by the said ML model to the neighbouring node(s), e.g. NG-RAN node 2. This information can be provided to plural nodes (e.g. all neighbouring nodes of the host node or a subset of neighbouring nodes selected by the host to be relevant nodes for the particular ML Model. If the Host node is in the management plane, e.g., OAM, this information can be provided to all nodes managed by the OAM, or to all nodes in a certain area. This information could also be published by the host to subscribers that have interest to receive Model capability information.

If the capability indicated by the host node fits to the requirements of the other node, the latter may subscribe to AI/ML model predictions (inference) of the host node according to the capability. Then, the host node may provide such predictions (inference) to the other node. For example, in some example embodiments, the host node first has to configure the model according to the capability. Here, configuring means to select a combination of input parameters to be used by the ML model for generating an inference. From the capability, the neighbour node knows the characteristics of the output.

Note that the ML model remains hosted by the host and is not transferred to the neighbor node although the host node may configure the ML model according to the subscription receives from the neighbor node.

In some example embodiment, the host node informs the neighbor node(s) on more than one AI/ML model with a respective capability supported by the host node.

In NG-RAN architecture, this information can be sent in the Xn SETUP REQUEST/RESPONSE procedure over Xn interface or in the NG-RAN NODE CONFIGURATION UPDATE/ NG-RAN NODE CONFIGURATION UPDATE ACKNOWLEDGE procedure. For example, original supported ML Model capabilities can be exchanged between neighbour NG-RAN nodes during the Xn SETUP procedure. When an ML Model is updated, the new Model Capabilities can be communicated between neighbour nodes using NG-RAN NODE CONFIGURATION UPDATE/NG-RAN NODE CONFIGURATION UPDATE ACKNOWLEDGE procedures. Note that similar information exchange may be supported over other interfaces, e.g., over F1 interface between CU and DU, or over E1 interface between control plane and user plane of the CU, or over the interface between OAM and RAN.

Each ML model is identified by a respective model ID. Providing of one or more Model Capabilities may be performed in a standardized format. Typically, if the neighbour node receives the capabilities of the model(s), it stores them along with the model ID.

An example of a model ID is as follows. The model identifier may identify the function/purpose of the ML-assisted algorithm ML model). It may be described in the ASN.1 and may be named *ML-Model-ID.* The ML model IDs may be standardized. A model ID may be unique inside the RAN. For example, part of the Model ID may be related to the entity that has trained the ML model. As an example if the ML Model is trained in the OAM, then model ID could include "OAM" or another binary combination mapped to be interpreted as "OAM". Similarly if the ML Model is trained in the gNB, in the UE, or in case of split architecture in the gNB-CU, gNB-CU-CP, gNB-CU-UP, or the gNB-DU, it can be indicated through the ML Model name.

A model ID could also indicate a use case that the model is targeting. For example, the AI/ML Model may support Load Balancing, Energy Saving, Mobility Enhancements, Positioning features, to mention a few. The model ID could also indicate a feature it is targeting. For example, is the AI/ML model may be a model for UE Trajectory prediction, Load Prediction, Traffic Prediction, Energy Prediction, etc.

As one example, Model IDs may be managed across vendors or across networks in one of the following possibilities:
1. Standardized model ID values defined by 3GPP: It could be of N bits of which some are allocated for the features (LB/EE etc.,) with other bits assigned for sub-features like inter-RAT LB, inter-cell LB etc., Examples : 0x0101-LB (inter-RAT), 0x0102-Intra-RAT LB, 0x0201-Mobility Enhancement(Traffic Steering), 0x0201-Mobility Enhancement (Intra-gNB mobility)
2. 3GPP defines self-explanatory ML Capability lEs: For example IE LB-Capabilities) It is to be understood that this list is non-exhaustive and other possible ways of standardizing Model IDs can be thought of.

The capability of the ML model (ML-assisted algorithm ) may be expressed as follows. For example, an ML-assisted algorithm that provides a prediction (such as the amount of air interface resources (e.g. physical resource blocks) for a given time window T) may expose its capabilities as a tuple of {List of inputs, List of outputs, Inference characteristics}. An example is explained with reference to Tables 1 to 3:

The Model capability may comprise a list of inputs that may be used by the ML model and a list of outputs that may be provided as Model inference (prediction). An example of such lists is shown in Table 1. Note that Table 1 shows two separate lists of one column each.

**Table 1: List of inputs of the ML model (left column) and list of outputs of the ML model (right column) according to some example embodiments of the invention.**

| **List of Inputs (may be used by ML model)** | **List of Outputs (may be outputted by ML model)** |
|---|---|
| **(I-1)** UE location information | **(O-1)** Predicted resource status |
| **(I-2)** UE measurement report | **(O-2)** Predicted resource utilization |
| **(I-3)** gNB predicted traffic | **(O-3)** Model output validity time (prediction is valid for a certain duration of time T) |
| **(I-4)** UE predicted traffic | **(O-4)** Confidence level of prediction |
| **(I-5)** UE mobility/trajectory | **(O-5)** Reliability of prediction |
| **(I-6)** Current energy state (e.g., active, high, low, inactive) | (O-6) Predicted Energy Efficiency |
| **(I-7)** UE Mobility History | |

In the example of Table 1, the AI/ML model does not provide the output 0-6. For example, the output O-6 may be an output provided by a different ML Model. Therefore, "(O-6)" is not marked in bold, differently from the other outputs.

In some example embodiments, based on the lists of inputs and outputs for a given ML model (identified by a respective ML model identifier), an "Inference characteristics" matrix informs on the outputs which the ML model may provide dependent on which inputs are available. An example of such an "inference characteristics" matrix is shown in Table 3. To simplify the "inference characteristics table, in Table 2, different input combinations are listed and labelled as "Input combination i".

**Table 2: Definition of the input parameters for each combination according to some example embodiments of the invention**

| **Input ID** | **Input Combination 1** | **Input Combination 2** | **Input Combination 3** | **Input Combination 4** | **Input Combination 5** |
|---|---|---|---|---|---|
| **I-1** | X | - | - | - | - |
| **I-2** | X | X | X | X | X |
| **I-3** | X | X | X | X | X |
| **I-4** | X | X | - | - | - |
| **I-5** | X | X | X | X | - |
| **I-6** | X | X | X | X | X |
| **I-7** | X | X | X | - | - |

In the left column, the IDs (I-1 to I-7) of the input parameters of table 1 are listed. If a field in the other columns comprises "X", it means that the respective input has to be provided for the respective input combination. E.g., for the Input Combination 5, the inputs I-2, I-3, and I-6 are used, while the inputs I-1, I-4, I-5, and I-7 are not used, and for the Input Combination 1, all inputs I-1 to I-7 are used.

Finally, Table 3 shows Inference characteristics for each of the input combinations:

**Table 3: Inference characteristics per combination according to some example embodiments of the invention**

| **Inference characteristics** | **O-1** | **O-2** | **O-3** | **O-4** | **O-5** |
|---|---|---|---|---|---|
| **Input Combination 1** | 10 levels - increments of 10% percent | PRB level granularity in cell | Up to 5 seconds | [95-98] percentage | 95% or higher |
| **Input Combination 2** | 5 levels - increments of 20% percent | PRB level granularity in cell | Up to 5 seconds | [90-94] percentage | 90% or higher |
| **Input Combination 3** | 3 levels - increments: high, medium, low | Beam level granularity in cell | Up to 3 seconds | [80-92] percentage | 80% or higher |
| **Input Combination 4** | 3 levels - increments: high, medium, low | Beam level granularity in cell | Up to 3 seconds | [70-85] percentage | 70% or higher |
| **Input Combination 5** | 3 levels - increments: high, medium, low | Cell level granularity | Up to 1 second | [60-70] percentage | 60% or higher |

The left column lists the input combinations, e.g. combinations 1 to 5 of Table 2. E.g. "Input combination 5" means that the ML model uses the inputs I-2, I-3, and I-6, while it does not use the inputs I-1, I-4, I-5, and I-7, and "Input combination 1" means that all inputs I-1 to I-7 are used.

The other columns of Table 3 indicate the characteristics of the outputs O-1 to O-5 of Table 1 for each of the input combinations. For example, if Input combination 1 is used (i.e. all input parameters I-1 to I-7 are used by the ML model), the predicted resource status (output parameter O-1) will be indicated by 10 levels increments of 10%, and the predicted resource utilization (output parameter O-2) will be indicated with PRB level granularity in a cell, the validity time is up to 5 seconds (output parameter O-3), the confidence level of the prediction is 95 to 98% (output parameter O-4); and the reliability is 95% or higher (output parameter O-5). Table 3 does not comprise a column for the output parameter O-6 because parameter O-6 is not an output parameter for the ML model.

As can be seen from the table, for different input combinations, the Inference characteristics in the Output may correspond to different levels of granularity in time, e.g., validity time may be up to 5 seconds for input combination 1 but up to 1 second for input combination 5). In addition, for different input combinations resource status reporting can be per PRB level, per beam level or per cell level. Different input combinations may result in different confidence of a ML output e.g., if input combination 1 is used (that utilizes all the supported Model Inputs), confidence (inference characteristic O-4) is very high (95-98%) while for input combination 5 (that utilized the least of the inputs) the confidence is the lowest (60-70%).

As may be seen, the host only exposes input combinations and output inference characteristics but does not expose any details of the ML model (algorithm/training data etc.,) or the ML model itself. This way, confidentiality of the model is maintained. Confidentiality may be crucial in particular for inter-vendor scenarios.

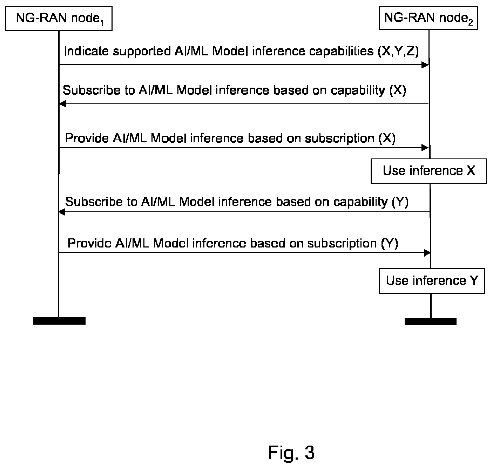

Fig. 3 shows another message sequence chart according to some example embodiments of the invention. In this message sequence chart, the host (NG-RAN node 1) informs the other one or more nodes (e.g. NG-RAN node 2) about plural capabilities X, Y, Z of the AI/ML model.

Then, the other node may select one of the capabilities (e.g. X) and subscribe to inference from the AI/ML model with characteristics X.

As described with respect to Fig. 2, the host may configure the AI/ML model with capability X if needed and may than provide inference with the desired characteristics to the other node which may then use the inference.

After some time, the other node may decide that the characteristics of capability Y are useful. Then, it may subscribe at the host to the AI/ML model with configuration Y. This subscription may either replace the former subscription with characteristics X, or the other node may have two subscriptions to the AI/ML model: one with characteristics X and one with characteristics Y. The host may configure the AI/ML model with capability Y if needed and may than provide inference with the desired characteristics to the other node which may then use the inference.

In some example embodiments, the host may inform the other node(s) on more than one AI/ML models with supported one or more capabilities for each of the AI/ML models.

According to some example embodiments, the host may provide (e.g. by a support indication) a list of ML models that it may support on request but which are not ready for immediate inference calculation. For example, the host may provide a list of one or more ML models that are supported, but not kept up-to-date in training. As another example, the ML model has not had a particular data set used for training for a given capability. In this case, if the neighbour node subscribes to the AI/ML model with the given capability, the host may either reject such a request or accept it. For example, it may accept the request if it received a predefined minimum number of such requests for a specific ML model within a predefined time, otherwise, it may reject the request. If the host accepts the request, it has to make the ML model ready for inference calculation, e.g. the host may train the ML model then.

In some example embodiments, the host may decide for each subscription whether or not it accepts the subscription, regardless of whether the respective ML model is ready for immediate inference calculation.

According to some example embodiments, the messages between the nodes are exchanged directly between the nodes, e.g. via Xn or X2 interfaces. They have an advantage over a manual, OAM based approach, where the OAM indicates the RAN capabilities to the other nodes such that any impacts on Xn or X2 interfaces are avoided. This has the following reasons:
1. In the inter-vendor cases, the RAN nodes could have their own OAM frameworks. Sharing data across OAMs may not work reliably because of different supported procedures, formats, IE values etc.,
2. In large deployments of 100s or 1000s of NG-RAN nodes, OAM based updates could involve a lot of manual work, with the risk of errors being introduced (for example, not all RAN nodes could be synchronized - leading to issues that are hard to debug.

Figs. 2 and 3 explain examples where the other node subscribes at the host to an AI/ML model with a certain capability. The host interprets the subscription as a request to configure the AI/ML model according to the capability and to provide the prediction/inference according to the capability to the other node. However, in some example embodiments, the request for configuring may be separate from the request to provide the prediction/inference. For example, only the latter request may be a subscription, while the former request may be a separate command.

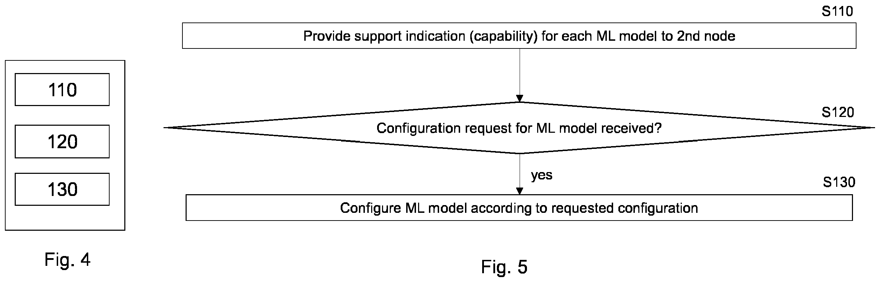

Fig. 4 shows an apparatus according to an example embodiment of the invention. The apparatus may be a node (in particular a host node), such as a base station (e.g. gNB or eNB), or an element thereof. Fig. 5 shows a method according to an example embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises means for providing 110, means for monitoring 120, and means for configuring 130. The means for providing 110, means for monitoring 120, and means for configuring 130 may be a providing means, monitoring means, and configuring means, respectively. The means for providing 110, means for monitoring 120, and means for configuring 130 may be a provider, monitor, and configurator, respectively. The means for providing 110, means for monitoring 120, and means for configuring 130 may be a providing processor, monitoring processor, and configuring processor, respectively.

The means for providing 110 provides, to a second node (e.g. gNB), a respective support indication for each of one or more ML models (S110). The respective support indication indicates that a first node (e.g. gNB) supports the respective ML model. The first node is different from the second node. For each of the one or more ML models, the respective support indication comprises an identifier of the respective ML model and at least one capability of the respective ML model.

The means for monitoring 120 monitors whether the first node receives, from the second node for at least one of the one or more ML models, a configuration request (S120). The configuration request requests to configure the respective ML model according to a respective requested configuration.

If the first node receives the configuration request for the at least one of the one or more ML models from the second node (S120 = yes), the means for configuring 130 configures the at least one of the one or more ML models according to the respective requested configuration (S130).

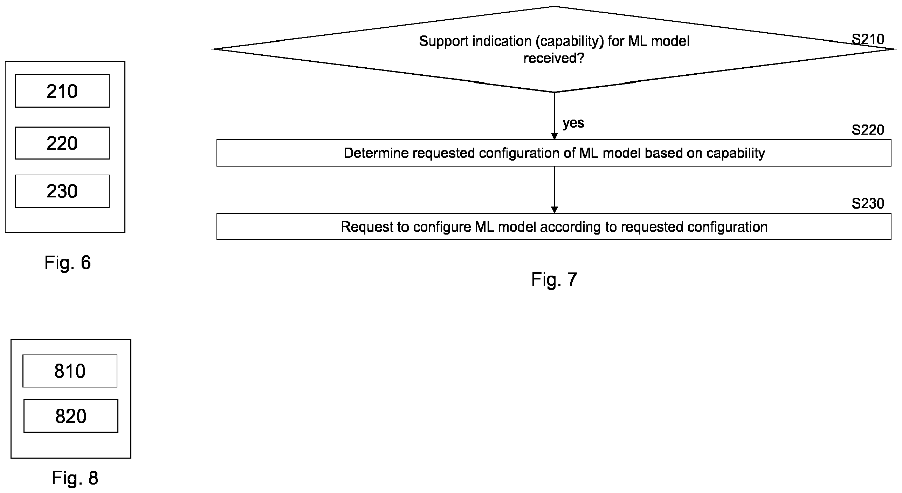

Fig. 6 shows an apparatus according to an example embodiment of the invention. The apparatus may be a node (in particular a neighbor node), such as a base station (e.g. gNB or eNB), or an element thereof. Fig. 7 shows a method according to an example embodiment of the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises means for monitoring 210, means for determining 220, and means for providing 230. The means for monitoring 210, means for determining 220, and means for providing 230 may be a monitoring means, determining means, and providing means, respectively. The means for monitoring 210, means for determining 220, and means for providing 230 may be a monitor, determiner, and provider, respectively. The means for monitoring 210, means for determining 220, and means for providing 230 may be a monitoring processor, determining processor, and providing processor, respectively.

The means for monitoring 210 monitors whether a second node receives, for each of one or more ML models, a respective support indication (S210). For each of the one or more ML models, the respective support indication indicates that a first node supports the respective ML model. The first node is different from the second node. For each of the one or more ML models, the respective support indication comprises an identifier of the respective ML model and at least one capability of the respective ML model.

If the second node receives the support indication for each of the one or more ML models (S210 = yes), the means for determining 220 determines, for at least one ML model of the one or more ML models, a respective requested configuration of the respective ML model. For the at least one ML model of the one or more ML models, the respective requested configuration is based on the at least one capability of the respective ML model.

The means for providing 230 provides a configuration request to the first node (S230). The configuration request requests to configure the at least one ML model according to the respective requested configuration. The configuration request comprises the identifier(s) of the at least one ML model.

Fig. 8 shows an apparatus according to an example embodiment of the invention. The apparatus comprises at least one processor 810, at least one memory 820 storing instructions that, when executed by the at least one processor 810, cause the apparatus at least to perform the method according to at least one of the following figures and related description: Fig. 5 or Fig. 7.

Some example embodiments are explained where the nodes are neighboring nodes. However, in general, the nodes may be arbitrarily arranged in space and need not be neighbored.

Some example embodiments are explained with respect to a 5G network. However, the invention is not limited to 5G. It may be used in other communication networks, too, e.g. in previous of forthcoming generations of 3GPP networks such as 4G, 6G, or 7G, etc. It may be used in non-3GPP communication networks, too.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a node, such as a base station (e.g. eNB or gNB) or a NWDAF, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising:
one or more processors, and memory storing instructions that, when executed by the one or more processors, cause the apparatus to perform:
providing, to a second node different from a first node, for each of one or more machine learning models, a respective support indication, wherein the respective support indication indicates that the first node supports the respective machine learning model, and the respective support indication comprises an identifier of the respective machine learning model and at least one capability of the respective machine learning model;
monitoring whether the first node receives, from the second node for at least one of the one or more machine learning models, a configuration request requesting to configure the respective machine learning model according to a respective requested configuration;
configuring the at least one of the one or more machine learning models according to the respective requested configuration if the first node receives the configuration request for the at least one of the one or more machine learning models from the second node.

2. The apparatus according to claim 1, wherein the instructions, when executed by the one or more processors, further cause the apparatus to perform:
inhibiting, for at least one of the one or more machine learning models, transferring the respective machine learning model to the second node.

3. The apparatus according to claim 1 or 2, wherein, for each of the one or more machine learning models, the capability of the respective machine learning model comprises at least one input that may be used by the respective machine learning model, at least one output that may be provided by the respective machine learning model, and for each of the at least one output, a characteristic of the respective output dependent on the at least one input.

4. The apparatus according to any of claims 1 to 3, wherein the instructions, when executed by the one or more processors, further cause the apparatus to perform for the at least one of the one or more machine learning models:
deciding if the configuration request for the respective machine learning model is accepted;
inhibiting the configuring the respective machine learning model if the configuration request is not accepted.

5. Apparatus comprising:
one or more processors, and memory storing instructions that, when executed by the one or more processors, cause the apparatus to perform:
monitoring whether a second node receives, for each of one or more machine learning models, a respective support indication, wherein the respective support indication indicates that a first node different from the second node supports the respective machine learning model, and the respective support indication comprises an identifier of the respective machine learning model and at least one capability of the respective machine learning model;
determining, for at least one machine learning model of the one or more machine learning models, a respective requested configuration of the respective machine learning model if the second node receives the support indication for each of the one or more machine learning models, wherein the respective requested configuration is based on the at least one capability of the respective machine learning model;
providing, to the first node, a configuration request requesting to configure the at least one machine learning model according to the respective requested configuration, wherein the configuration request comprises the identifiers of the at least one machine learning model.

6. The apparatus according to claim 5, wherein the instructions, when executed by the one or more processors, further cause the apparatus to perform:
requesting, from the first node, to provide a first inference generated by a first machine learning model of the at least one machine learning model after the configuration request for the first machine learning model is provided to the first node;
supervising whether the second node receives the first inference from the first node;
applying, by the second node, the first inference if the second node receives the first inference from the first node.

7. The apparatus according to claim 5 or 6, wherein the instructions, when executed by the one or more processors, further cause the apparatus to perform:
storing, for each of the one or more machine learning models, the identifier of the respective machine learning model and the at least one capability of the respective machine learning model at the second node if the second node receives the support indication for the respective machine learning model.

8. The apparatus according to any of claims 5 to 7, wherein, for each of the one or more machine learning models, the capability of the respective machine learning model comprises at least one input that may be used by the respective machine learning model, at least one output that may be provided by the respective machine learning model, and for each of the at least one output, a characteristic of the respective output dependent on the at least one input.

9. Method comprising:
providing, to a second node different from a first node, for each of one or more machine learning models, a respective support indication, wherein the respective support indication indicates that the first node supports the respective machine learning model, and the respective support indication comprises an identifier of the respective machine learning model and at least one capability of the respective machine learning model;
monitoring whether the first node receives, from the second node for at least one of the one or more machine learning models, a configuration request requesting to configure the respective machine learning model according to a respective requested configuration;
configuring the at least one of the one or more machine learning models according to the respective requested configuration if the first node receives the configuration request for the at least one of the one or more machine learning models from the second node.

10. The method according to claim 9, further comprising:
inhibiting, for at least one of the one or more machine learning models, transferring the respective machine learning model to the second node.

11. The method according to claim 9 or 10, wherein, for each of the one or more machine learning models, the capability of the respective machine learning model comprises at least one input that may be used by the respective machine learning model, at least one output that may be provided by the respective machine learning model, and for each of the at least one output, a characteristic of the respective output dependent on the at least one input.

12. The method according to any of claims 9 to 11, further comprising, for the at least one of the one or more machine learning models:
deciding if the configuration request for the respective machine learning model is accepted;
inhibiting the configuring the respective machine learning model if the configuration request is not accepted.

13. Method comprising:
monitoring whether a second node receives, for each of one or more machine learning models, a respective support indication, wherein the respective support indication indicates that a first node different from the second node supports the respective machine learning model, and the respective support indication comprises an identifier of the respective machine learning model and at least one capability of the respective machine learning model;
determining, for at least one machine learning model of the one or more machine learning models, a respective requested configuration of the respective machine learning model if the second node receives the support indication for each of the one or more machine learning models, wherein the respective requested configuration is based on the at least one capability of the respective machine learning model;
providing, to the first node, a configuration request requesting to configure the at least one machine learning model according to the respective requested configuration, wherein the configuration request comprises the identifiers of the at least one machine learning model.

14. The method according to claim 13, further comprising:
requesting, from the first node, to provide a first inference generated by a first machine learning model of the at least one machine learning model after the configuration request for the first machine learning model is provided to the first node;
supervising whether the second node receives the first inference from the first node;
applying, by the second node, the first inference if the second node receives the first inference from the first node.

15. The method according to claim 13 or 14, further comprising:
storing, for each of the one or more machine learning models, the identifier of the respective machine learning model and the at least one capability of the respective machine learning model at the second node if the second node receives the support indication for the respective machine learning model.

16. The method according to any of claims 13 to 15, wherein, for each of the one or more machine learning models, the capability of the respective machine learning model comprises at least one input that may be used by the respective machine learning model, at least one output that may be provided by the respective machine learning model, and for each of the at least one output, a characteristic of the respective output dependent on the at least one input.

17. A computer program product comprising a set of instructions which, when executed on an apparatus, is configured to cause the apparatus to carry out the method according to any of claims 9 to 12 or 13 to 16.
